# EUROPÄISCHE PATENTSCHRIFT

(11) **EP 0 796 228 B1**
(45) Veröffentlichungstag und Bekanntmachung des Hinweises auf die Patenterteilung: **07.01.1999**
(21) Anmeldenummer: 95936513.1
(22) Anmeldetag: 17.10.1995
(51) Int. Cl.: C02F 1/70

(54) **VERFAHREN ZUR KATALYTISCHEN BEHANDLUNG VON ORGANISCHE UND ANORGANISCHE VERBINDUNGEN ENTHALTENDEN ABWÄSSERN**
METHOD OF CATALYTICALLY TREATING WASTE WATER CONTAINING ORGANIC AND INORGANIC COMPOUNDS
PROCEDE DE TRAITEMENT CATALYTIQUE D'EAUX USEES CONTENANT DES COMPOSES ORGANIQUES ET INORGANIQUES

(30) Priorität: 09.12.1994 DE 4443884
(43) Veröffentlichungstag der Anmeldung: 24.09.1997
(73) Patentinhaber: Solvay Deutschland GmbH, D-30173 Hannover (DE)
(72) Erfinder: DERLETH, Helmut, D-31582 Nienburg (DE); BRETZ, Karl-Heinz, D-31582 Nienburg (DE); NEUENFELDT, Gerhard, D-31629 Estorf (DE); OTTMANN, Alfred, D-30627 Hannover (DE); SCHINDLER, Hubert, D-31311 Uetze (DE)
(74) Vertreter: Lauer, Dieter, Dr.
(86) Internationale Anmeldenummer: EP9504077
(87) Internationale Veröffentlichungsnummer: WO9617806

(56) Entgegenhaltungen:
- WO-A-94/20423

## Beschreibung

Die Erfindung betrifft ein Verfahren zur reduktiven katalytischen Behandlung von Abwässern, die insbesondere halogenorganische und gegebenenfalls organische und anorganische Verbindungen enthalten, unter Verwendung eines geträgerten Edelmetallkatalysators.

Die Abwässer, die erfindungsgemäß behandelt werden können, können aus verschiedenen Bereichen der chemischen Technik stammen, in denen halogenhaltige organische Stoffe entstehen. Die Abwässer sind häufig noch salzhaltig und enthalten außerdem noch Feststoffe, so daß die bisherigen Behandlungsverfahren oftmals beeinträchtigt waren.

Die bekannten Verfahren zur katalytischen Behandlung von Abwässern, die halogenorganische, insbesondere chlororganische Verbindungen enthalten, setzen z. B. Alkali- oder Erdalkaliverbindungen oder Edelmetalle oder Edelmetallverbindungen als Katalysator ein. So ist bekannt, daß der Abbau der im Abwasser enthaltenden chlororganischen Verbindungen in Gegenwart von Platin, Palladium oder Rhodium sehr gut gelingt, wobei Palladium die größte Aktivität besitzt. Weitere Untersuchungen zeigten, daß die Wahl des Trägermaterials für die Katalysatoraktivität nicht zu unterschätzen ist. So ist bekannt, daß Palladium auf Aluminiumoxid als Träger eine geringere Aktivität als Palladium auf Kohlenstoff als Träger besitzt.

Nachteil der häufig benutzten Trägermaterialien Siliziumdioxid oder Aluminiumoxid ist deren ungenügende Alkalistabilität. Außerdem kann bei höherbelasteten Abwässern eine Katalysatordesaktivierung schon nach relativ kurzen Standzeiten auftreten, die eine Regenerierung oder sogar einen Austausch des Katalysators erforderlich macht.

Die WO 94/20423 beschreibt ein Verfahren zur katalytischen Behandlung von Abwässern an einem Edelmetallkatalysator, wobei ein Katalysatorträger Verwendung findet, der anorganisches Oxid und Kohlenstoff enthält.

Aussagen über Alkalistabilität und Betriebsdauer des Katalysators kann man dieser Schrift nicht entnehmen.

Aufgabe der Erfindung ist die Entwicklung eines Verfahrens zur Abwasserbehandlung unter Verwendung eines geträgerten Edelmetallkatalysators mit erhöhter Lebensdauer und erhöhter Alkalistabilität.

Erfindungsgemäß wird die Aufgabe dadurch gelöst, daß das Abwasser zur Entfernung der halogenorganischen, insbesondere chlororganischen Verbindungen und gegebenenfalls anorganischen und organischen Verbindungen, an einem modifizierten Edelmetallträgerkatalysator mit Wasserstoff behandelt wird.

Als aktive Komponente enthält der Katalysator Metalle der achten Nebengruppe des PSE z. B. Platin, Palladium, Iridium oder Rhodium, vorzugsweise Palladium, allein oder in Kombination miteinander.

Als Trägermaterial wird Zirkonoxid, vorzugsweise sprühgeliertes Zirkonoxid verwendet.

Die Herstellung des sprühgelierten Zirkonoxids erfolgt analog den in DE 24 04 463 und DE 25 46 318 beschriebenen Verfahren.

Es kann jedoch auch Zirkonoxid als Trägermaterial eingesetzt werden, das nach dem Sol-Gel-Verfahren hergestellt wurde. Zur Herstellung des Trägermaterials wird hierbei zunächst eine flüssige alkalische Komponente mit einer flüssigen sauren Komponente zu einem Sol vereinigt. Dieses Sol kann in an sich bekannter Weise zu Formkörpern verfestigt werden, z. B. durch Eintragen in ein Formölbad. Die verfestigten Solteilchen werden anschließend gealtert, gewaschen, getrocknet und kalziniert.

Das erfindungsgemäß bevorzugt verwendete Zirkonoxid weist folgende Parameter auf:

| Herstellungsart: | Sprühgelierung | |
|---|---|---|
| BET-Oberfläche m²/g | < 100, | vorzugsweise 30-50 |
| Porenvolumen cm³/g | < 0,4, | vorzugsweise 0,05 - 0,2 |

Die spezifische Oberfläche, daß Porenvolumen und die Porenverteilung dieser Teilchen kann durch Quecksilberporosimetrie oder Aufnahme und Auswertung von Stickstoffadsorptionskurven auf an sich bekannte Weise bestimmt werden. Das Maximum der Porendurchmesser und der mittlere Porendurchmesser lassen sich dann hieraus ermitteln.

Bevorzugt zeigen diese Teilchen eine monomodale Porenverteilung, bei der 80 %, vorzugsweise 95 % der Porendurchmesser der Formel 0,8 R ≤ R ≤ 1,2R entsprechen, wobei R dem mittleren Porendurchmesser entspricht.

Ein anderes geeignetes Trägermaterial wird auch erhalten, wenn auf einen inerten nicht porösen Kern ZrO₂ aufgebracht wird.

Erfindungsgemäß wird das Abwasser, insbesondere aus der Polyetherpolyolherstellung mit einem pH-Wert von 7 bis 14, vorzugsweise 12 bis 14 in mindestens einem Reaktor, in dem sich der geträgerte Edelmetallkatalysator befindet, eingeleitet und bei 5 bis 90 °C, vorzugsweise bei 10 bis 30 °C und 1 bis 10 bar mit Wasserstoff behandelt.

Die Einstellung des pH-Wertes erfolgt in an sich bekannter Weise.

Es hat sich als zweckmäßig erwiesen, die Behandlung in Gegenwart einer solchen Menge Wasserstoff durchzuführen, die mindestens der stöchiometrisch berechneten Menge des zu entfernenden AOX-Gehaltes entspricht.

Die Löslichkeit des Wasserstoffgases in dem Wasser liegt bei Normaldruck und Temperaturen zwischen 10 °C und 25 °C unter 1,7 mg/l und erhöht sich proportional zum Arbeitsdruck.

Die Abbauleistung kann je nach der Anfangskonzentration der chemischen Natur der halogenorganischen Verbindungen, dem pH-Wert, der Wasserstoffgaskonzentration bzw. -begasungsrate und der Temperatur variieren.

Erfindungsgemäß können auch z. B. mit Edelmetallen oder Übergangsmetallen dotierte Katalysatoren verwendet werden, die als Edelmetalle Gold, Silber, Platin, Rhodium oder Palladium oder Übergangsmetalle wie Kupfer, vorzugsweise Palladium, enthalten. Der Gehalt an solchen Metallen liegt üblicherweise im Bereich von 0,1 bis 5 Gew.-%, bezogen auf den fertigen Katalysatorträger. Weiterhin können auch Metallverbindungen, z. B. Oxide von Metallen, insbesondere Oxide von Übergangsmetallen, z. B. Oxide von Mangan, Eisen, Nickel oder Kobalt enthalten sein. Natürlich können auch Gemische von Metallen, Gemische von Metallverbindungen oder Gemische von einem oder mehreren Metallen und einem oder mehreren Metallverbindungen auf dem Träger aufgebracht sein. Beispielsweise kann die Metallkomponente des Katalysators aus Palladium und/oder Rhodium oder aus Palladium und Kupfer bestehen. Vorzugsweise wird jedoch Palladium als Metallkomponente verwendet. Die Herstellung der erfindungsgemäßen Katalysatoren kann auf an sich bekannte Weise erfolgen. Beispielsweise kann man Metallsalze oder komplexe Metallverbindungen im Imprägnierverfahren, Sprühverfahren oder Fällungsverfahren auf die Teilchen aufbringen und nach Trocknung und Kalzinierung gewünschtenfalls reduzieren. Bevorzugt werden die Metalle durch ein Imprägnierverfahren, z. B. mit einer Lösung oder Suspension von Metallsalzen oder komplexen Metallverbindungen in Wasser oder einem organischem Lösungsmittel, auf die Teilchen aufgebracht. Ein Vorteil der auf Basis der erfindungsgemäß hergestellten Teilchen erhaltenen Katalysatoren ist deren hohe Abriebfestigkeit sowie die hohe Alkalistabilität des Katalysators.

Zur Herstellung von palladiumhaltigen Trägerkatalysatoren imprägniert man den Träger mit einer wäßrigen Lösung eine löslichen Palladiumverbindung, mit anschließender Trocknung und Glühung. Vorzugsweise wird der Träger zunächst mit einer wäßrigen Lösung einer Palladiumverbindung imprägniert, dann getrocknet und geglüht und gegebenenfalls reduziert.

Mit einem Palladiumträgerkatalysator mit 0,5 oder 1 % Palladium können z. B. Abbauleistungen von über 90 %, bezogen auf AOX Ausgangswerte, von ca. 5 g/l erzielt werden.

Der Wasserstoffeintrag in das Abwasser kann entweder durch direktes Einleiten von Wasserstoffgas oder mittels eines Membranmoduls erfolgen.

Besonders geeignet sind Membranen mit integralsymmetrischen Aufbau und insbesondere Kompaktmembranen. Diese Membranen besitzen eine poröse wasserbeständige Trägerstruktur und mindestens eine Schicht aus wasserbeständigen porenfreiem Polymer, an der das zu begasende Abwasser vorbeigeführt wird. Diese porenfreie Schicht besteht z. B. aus Silikonpolymer.

Andere Methoden, z. B. über Gassättigung, sind ebenfalls zum Wasserstoffeintrag geeignet. Der Wasserstoffeintrag kann entweder gleichzeitig mit dem Kontaktieren des Abwassers mit dem Katalysator erfolgen oder getrennt. In einer bevorzugten Variante erfolgt der Wasserstoffeintrag, bevor das Abwasser mit dem Katalysator in Kontakt kommt.

Zum katalytischen Abbau von hohen Schadstoffkonzentrationen wird vorteilhafterweise der Wasserstoff gleichzeitig mit dem Wasser in einen Dreiphasenreaktor (z.B. Rieselbettreaktor) mit dem Katalysator in Kontakt gebracht.

Es wurde gefunden, daß der eingesetzte Palladium/Zirkonoxid-Katalysator sich gegenüber den bisher eingesetzten Katalysatoren zur reduktiven katalytischen Abwasserbehandlung besonders durch seine längeren Standzeiten auszeichnet. Die Desaktivierung des Katalysators tritt erst nach längerer Betriebsdauer ein, so daß die ökonomischen Aspekte nicht von der Hand zu weisen sind. Ein weiterer Vorteil des Katalysators ist seine erhöhte Alkalistabilität.

Zur Bestimmung der Alkalistabilität wurden 10 g des Katalysatorträgers, sprühgeliertes Zirkonoxid in 100 g Natronlauge (pH 12) gegeben und diese Mischung 2 Stunden am Rückfluß gekocht. Danach wurde die überstehende Lösung durch Filtration abgetrennt und der Zirkongehalt in der überstehenden Lösung mit
≤ 0,1 mg/l
bestimmt.

Erfindungsgemäß kann die Behandlung des Abwassers unter Verwendung des erfindungsgemäßen geträgerten Edelmetallkatalysators im Festbett, Wirbelbett, Suspensionsbett als auch im Fließbett erfolgen. Beim Festbettverfahren wird das Wasser durch eine oder mehrere Reaktionseinheiten aus Wasserstoffbegasungsbehälter und Festbettreaktor, in dem sich der Katalysator befindet, geleitet.

Die Anlage kann übliche Meßeinrichtungen umfassen, z. B. Durchflußmeßgeräte, Druckmeßgeräte, pH-Meßgeräte, Temperaturmeßgeräte.

Für die Durchführung des Verfahrens in der Wirbelschicht oder Suspensionsschicht ist eine Druckerhöhungseinrichtunc, die zweckmäßigerweise mit einer Wassereintragsvorrichtung verbunden ist erforderlich, die das Wasser in den Wirbelbett-, Suspensionsbett- oder Fließbettreaktor, in dem sich der erfindungsgemäße Trägerkatalysator befindet, leitet.

Die Anlage kann u. a. Filtereinrichtung, Dosierbehälter, pH-Meß- und Regeleinrichtung und Meßstellen zur Bestimmung analytischer Daten des Wassers aufweisen.

Es hat sich als günstig erwiesen, zur Erreichung ökologisch unbedenklicher Werte, das erfindungsgemäß behandelte Abwasser nachzubehandeln. Insbesondere können Verfahren zur Senkung der CSB-Belastung nachgeschaltet werden.

Das nachfolgende Beispiel soll die Erfindung weiter erläutern, jedoch nicht einschränken.

### Beispiel:

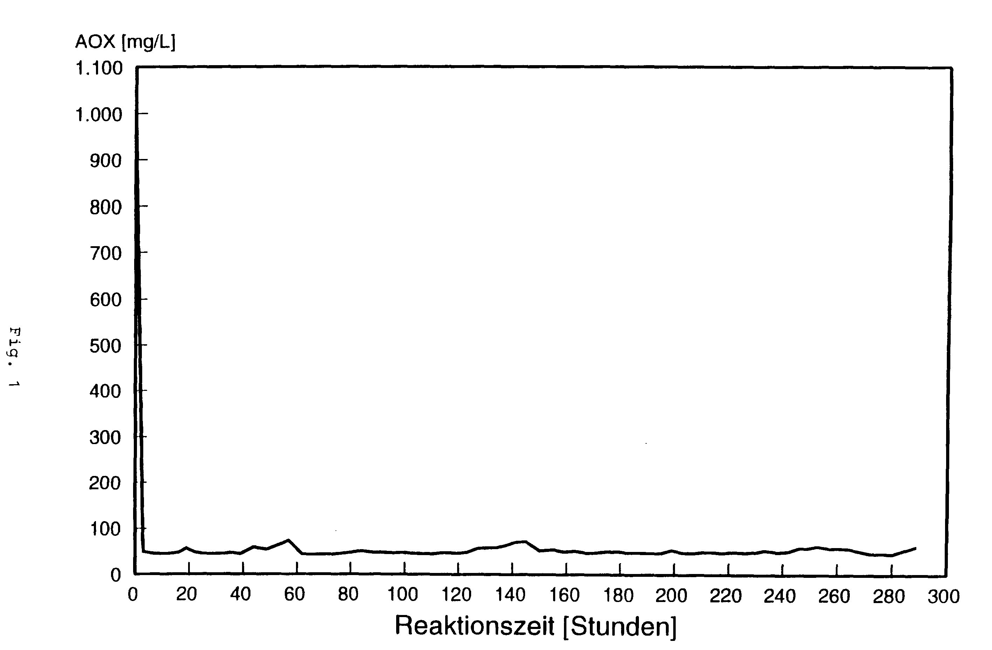

In einem kontinuierlichen Rührkesselreaktor befanden sich 7,5 g Katalysator mit einer Teilchengröße zwischen 60 µm und 100 µm. In dieser Apparatur wurde Abwasser aus der Polyetherpolyol-Produktion mit einem pH-Wert von 12,9 bei Normaldruck und Umgebungstemperatur katalytisch behandelt. Das Flüssigkeitsvolumen im Reaktor betrug 300 ml. Es wurde ein Durchfluß von 100 ml/h eingestellt. Die Rührgeschwindigkeit betrug 1.000 Upm. Aus einer G4-Fritte strömten mindestens 0,5 l/h Wasserstoffgas durch die Flüssigkeit. Vor der Behandlung hatte das Abwasser einen AOX-Gehalt von 1.014 mg/l. Nach der katalytischen Behandlung hatte das Abwasser einen AOX-Gehalt von 50 mg/l. Selbst nach einer Reaktionszeit von 264 Stunden konnte keine Desaktivierung des Katalysators festgestellt werden, obwohl das Abwasser zusätzlich zum AOX-Gehalt eine CSB-Belastung von 17 g/l aufwies. (Fig. 1)

## Patentansprüche

1. Verfahren zur katalytischen Behandlung von Abwässern, die halogenorganische und gegebenenfalls organische und anorganische Verbindungen enthalten und einen pH-Wert von 7-14 aufweisen, an einem geträgerten Edelmetallkatalysator, der Metalle der achten Nebengruppe des PSE allein oder in Kombination miteinander enthält, in Gegenwart von Wasserstoff, dadurch gekennzeichnet, daß als Katalysatorträger Zirkonoxid verwendet wird.

2. Verfahren zur katalytischen Behandlung von Abwässern nach Anspruch 1, dadurch gekennzeichnet, daß sprühgeliertes Zirkonoxid als Trägermaterial verwendet wird.

3. Verfahren zur katalytischen Behandlung von Abwässern nach Anspruch 1 und 2, dadurch gekennzeichnet, daß das Abwasser mit einem pH-Wert von 7 bis 14, insbesondere 12 bis 14, bei 5 bis 90 °C, vorzugsweise 10 bis 30 °C und 1 bis 10 bar in Gegenwart von Wasserstoff mit einem Pd/ZrO₂-Katalysator kontaktiert wird.

4. Verfahren zur katalytischen Behandlung von Abwässern nach Anspruch 1 bis 3, dadurch gekennzeichnet, daß sprühgeliertes Zirkonoxid mit einer BET-Oberfläche < 100 m²/g, vorzugsweise 30 bis 50 m²/g und einem Porenvolumen < 0,4 cm³/g, vorzugsweise 0,05 bis 0,2 cm³/g, verwendet wird.

5. Verfahren zur katalytischen Behandlung von Abwässern nach Anspruch 1 bis 4, dadurch gekennzeichnet. daß als Trägermaterial Zirkonoxid, das auf einen inerten nichtporösen Kern aufgebracht wurde, verwendet wird.

6. Verfahren zur katalytischen Behandlung von Abwässern nach Anspruch 1 bis 5, dadurch gekennzeichnet, daß Abwasser der Polyetherpolyolproduktion behandelt werden.

## Claims

1. Process for the catalytic treatment of waste waters containing organohalogen and optionally organic and inorganic compounds and having a pH value of 7 - 14 over a supported noble metal catalyst which contains metals of the eighth subgroup of the periodic table, alone or combined with one another, in the presence of hydrogen, characterised in that zirconium oxide is used as catalyst support.

2. Process for the catalytic treatment of waste waters according to Claim 1, characterized in that the support material used is spray-gelled zirconium oxide.

3. Process for the catalytic treatment of waste waters according to Claims 1 and 2, characterized in that the waste water is contacted with a Pd/ZrO₂ catalyst in the presence of hydrogen at a pH value of 7 to 14, in particular 12 to 14, at 5 to 90°C, preferably 10 to 30°C, and 1 to 10 bar.

4. Process for the catalytic treatment of waste waters according to Claims 1 to 3, characterized in that spray-gelled zirconium oxide having a BET surface area < 100 m²/g, preferably 30 to 50 m²/g, and a pore volume < 0.4 cm³/g, preferably 0.05 to 0.2 cm³/g, is used.

5. Process for the catalytic treatment of waste waters according to Claims 1 to 4, characterized in that the support material used is zirconium oxide applied to an inert nonporous core.

6. Process for the catalytic treatment of waste waters according to Claims 1 to 5, characterized in that waste waters from polyetherpolyol production are treated.

## Revendications

1. Procédé de traitement catalytique d'eaux usées qui contiennent des composés organiques halogénés et le cas échéant des composés organiques et inorganiques, et qui présentent un pH de 7 à 14, sur un catalyseur en métal précieux sur support qui contient des métaux du huitième sous-groupe de la classification périodique des éléments, seuls ou en combinaison les uns avec les autres, en présence d'hydrogène, caractérisé en ce qu'on utilise comme support de catalyseur l'oxyde de zirconium.

2. Procédé de traitement catalytique d'eaux usées selon la revendication 1, caractérisé en ce qu'on utilise de l'oxyde de zirconium gélifié par atomisation comme support.

3. Procédé de traitement catalytique d'eaux usées selon les revendications 1 et 2, caractérisé en ce qu'on met en contact l'eau usée ayant un pH de 7 à 14, en particulier de 12 à 14, à 5 jusqu'à 90°C, de préférence de 10 à 30°C et à 1 jusqu'à 10 bars en présence d'hydrogène avec un catalyseur Pd/ZrO₂.

4. Procédé de traitement catalytique d'eaux usées selon les revendications 1 à 3, caractérisé en ce qu'on utilise de l'oxyde de zirconium gélifié par atomisation ayant une surface BET inférieure à 100 m²/g, de préférence de 30 à 50 m²/g, et un volume de pores inférieur à 0,4 cm³/g, de préférence de 0,05 à 0,2 cm³/g.

5. Procédé de traitement catalytique d'eaux usées selon les revendications 1 à 4, caractérisé en ce qu'on utilise comme matériau de support l'oxyde de zirconium qui a été déposé sur un noyau non poreux inerte.

6. Procédé de traitement catalytique d'eaux usées selon les revendications 1 à 5, caractérisé en ce qu'on traite l'eau usée de la production de polyéther-polyol.
